(19) **Europäisches Patentamt**
**European Patent Office**
**Office européen des brevets**

(11) Veröffentlichungsnummer: **0 065 281**
**B1**

(12) **EUROPÄISCHE PATENTSCHRIFT**

(45) Veröffentlichungstag der Patentschrift: **05.12.90**

(51) Int. Cl.⁵: **H 04 N 1/028**

(21) Anmeldenummer: **82104177.9**

(22) Anmeldetag: **13.05.82**

(54) **Abtastverfahren und Abtastblende zum Unterdrücken von Moiré bei der Abtastung gerasterter Vorlagen.**

(30) Priorität: **20.05.81 DE 3120030**

(43) Veröffentlichungstag der Anmeldung:
**24.11.82 Patentblatt 82/47**

(45) Bekanntmachung des Hinweises auf die
Patenterteilung:
**05.12.90 Patentblatt 90/49**

(84) Benannte Vertragsstaaten:
**AT BE CH DE FR GB IT LI NL SE**

(56) Entgegenhaltungen:
**US-A-3 115 545**

(73) Patentinhaber: **DR.-ING. RUDOLF HELL GmbH**
**Grenzstrasse 1-5**
**D-2300 Kiel 14 (DE)**

(72) Erfinder: **Jung, Eggert**
**Mühlenberg 25**
**D-2306 Schönberg (DE)**
Erfinder: **Wadle, Heinrich**
**Looper Weg 25**
**D-2350 Neumünster (DE)**

Courier Press, Leamington Spa, England.

## Beschreibung

### Technisches Gebiet

Die Erfindung bezieht sich auf das Gebiet der Reproduktionstechnik, wobei bei der Abtastung von bereits gerasterten Vorlagen für die spätere Reproduktion ausgegangen wird, insbesondere auf das Gebiet der Drucktechnik.

### Stand der Technik

Bei der optoelektronischen Abtastung von gerasterten Vorlagen auf Scannern und Graviergeräten entsteht das Problem, daß durch Überlagerung des Vorlagenrasters einerseits und des bei der Aufzeichnung in der Maschine zugesetzten Rasters andererseits ein störendes Moiré entsteht. Bei der Abtastung wird jeweils aus einer gleichmäßig beleuchteten Vorlagenstelle mittels einer Blende ein kleiner Bildpunkt auf der sensitiven Fläche eines elektronischen Lichtempfängers abgebildet, der das elektronische Signal für die Weiterverarbeitung und schließlich die Aufzeichnung erzeugt.

Ist die Größe des abgebildeten Flecks nicht groß gegen die Rasterweite einer gerasterten Vorlage, so erscheint im Ausgangssignal des Lichtempfängers in der Regel die Folgefrequenz der an der Abtastoptik bei der Abtastung vorbeilaufenden Rasterpunkte. Diese unerwünschte Frequenz interferiert mit der Frequenz, die dem Helligkeitssignal zur Aufrasterung der Aufzeichnung zugesetzt wird.

Aus der deutschen Patentanmeldung DE-A-30 10 880 ist ein Verfahren zur Vermeidung von Moiré in dem genannten Falle bekannt, das die Rasterstruktur der Vorlage und damit die unerwünschte Frequenz im Bildsignal dadurch verhindert, daß die abtastende Optik um einen gewissen Betrag unscharf gestellt wird. Um den dabei auftretenden Schärfeverlust zu vermeiden, wird bei dieser Patentanmeldung mit Hilfe einer elektronischen Unscharfmaskierung der Schärfeverlust mindestens zum Teil wieder kompensiert.

Es ist aus dem Handbuch, Agfa-Gevaert, Grafisches Material, Halbtonfotografie, 12, 1969, Seiten 132—137 ein Verfahren bekannt, bei dem durch Beugung an Blenden die Vorlage entrastet wird. Dieses Verfahren weicht aber von der vorliegenden Erfindung ab, da dort die verwendeten Blenden zur gleichzeitigen Abbildung der gesamten Vorlage ausgelegt und benutzt werden. Die dort beschriebenen Blenden sind nicht geeignet für die punkt- und zeilenweise Abtastung einer Vorlage, wie dies in elektronischen Reproduktionsgeräten geschieht.

### Aufgabenstellung

Der vorliegenden Erfindung liegt die Aufgabe zugrunde, ein Abtastverfahren und eine Blende anzugeben, die es gestatten, ein im beliebigen Rasterwinkel und in beliebiger Rasterkonfiguration aufgerastertes Bild als Vorlage in der Reproduktionstechnik zu benutzen, ohne daß bei der Wiederaufzeichnung selbst wenn diese ungerastert, in einer anderen Rasterweite, einem anderen Rasterwinkel oder einer anderen Rasterkonfiguration erfolgt weder störendes Moiré noch unzulässiger Schärfeverlust auftritt.

Die Erfindung erreicht dies durch die in den Ansprüchen 1 und 2 genannten Merkmale.

Die Erfindung wird im folgenden anhand der Figuren 1—12 näher beschrieben.

Es zeigen:

Figur 1 Rastermasche und Elementarzelle im Vorlagenraster,

Figur 2; 3; 4 Beispiele für Elementarzellen und Figur 5 bis 12 verschiedene Phasen eines Abtastvorgangs.

Im Prinzip wird die Aufgabe, wie im folgenden beschrieben, durch Wahl einer in Form und Größe geeigneten Abtastblende, die zum Raster der Vorlage in geeigneter Weise orientiert ist, gelöst.

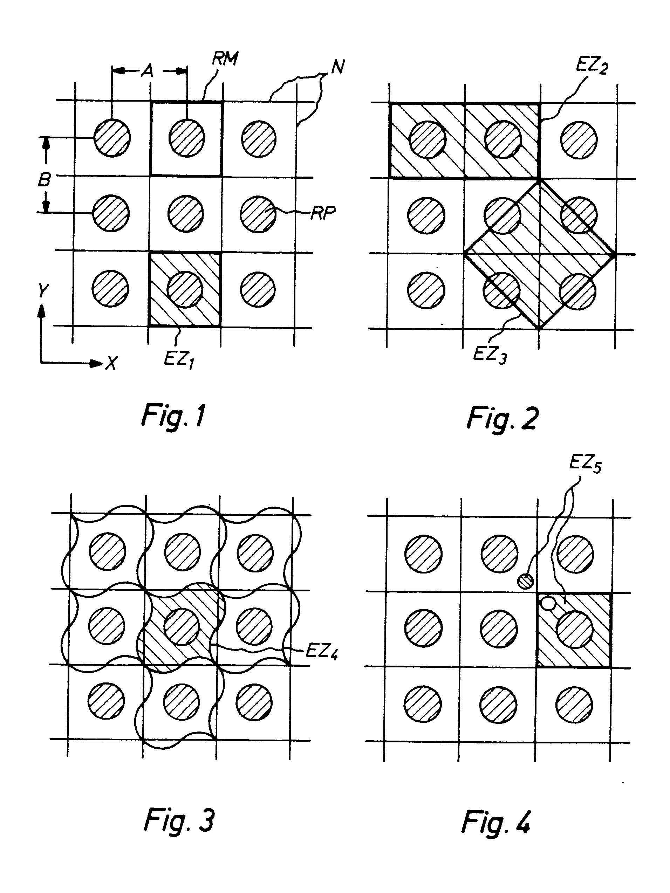

Zugrundegelegt sei ein periodisches Vorlagenraster, bei dem beliebige Maschenweiten und beliebige Winkelungen zugelassen sind. Der optische Dichteverlauf der einzelnen Rasterpunke läßt sich dann durch eine Funktion $\varphi(x, y)$ beschreiben Betrachtet man diese Funktion über eine Fläche mit gleichbleibendem Tonwert, so ist sie periodisch Sie habe die Periode A in X-Richtung und die Periode B in Y-Richtung (siehe Figur 1), wobei die Koordinaten X und Y auch schiefwinklig sein können. Um die Rasterperiode aus dem Abtastsignal zu eliminieren, kann der durch eine Blende definierte Abtastfleck ein Rechteck (bei schiefwinkligen Koordinaten ein Parallelogramm) mit den Kanten n × A und m × B sein, wobei n und m natürliche Zahlen sind und kann parallel zu den Achsen des Koordinatensystems ausgerichtet sein.

Eine weitere Möglichkeit besteht z.B. darin, das Rechteck bzw. Parallelogramm so zu wählen, daß die Diagonalen die Länge n × 2A und m × 2B haben und ebenfalls parallel zu den Achsen (X, Y) ausgerichtet sind. Wählt man im ersten Beispiel n = 1 und m = 1, so erhält man einen Abtastfleck, der eine moiréfreie Abtastung in einem beliebigen Raster mit optimaler Bildschärfe erlaubt. Es können, wie unten gezeigt, auch Blenden zugelassen werden, deren Begrenzung nicht geradlinig ist und deren Öffnung keine zusammenhängende Fläche zu sein braucht.

Bei der Ausrichtung der Blende zu den Achsen können sogar Winkelfehler zugelassen werden, wobei noch in den meisten Anwendungsfällen zufriedenstellende Resultate erzielt werden.

Figur 1 zeigt ein Vorlagenraster, das mit dem eben beschriebenen Verfahren abgetastet wird. Es läßt sich allgemein durch ein zweidimensionales Gitter aus einzelnen Rastermaschen beschreiben, in deren Mittelpunkten die Mittelpunkte der Rasterpunkte liegen. Ein solches Rastergitter läßt sich aus Elementarzellen aufbauen, wobei sich der Begriff Elementarzelle folgendermaßen definieren läßt: Die Fläche einer Elementarzelle entspricht der Fläche einer oder mehrerer Rastermaschen des Vorlagenrasters. Die Elementarzellen können beliebige zusammenhängende oder nicht zusammenhängende gleiche Flächen sein, deren Gesamtheit das Rasternetz der Vorlage lückenlos und ohne Überlappung überdeckt, wobei jede einzelne Elementarzelle so orientiert ist, daß die relative Lage der Elementarzelle zur Rastermasche über das gesamte Vorlagenrasternetz gleich ist.

In Figur 1 ist, wie bereits erwähnt, ein solches Vorlagenrasternetz N mit den Rasterabständen A, B und den Rasterpunkten RP dargestellt. In dieses Rasternetz sind durch stärkere Linien hervorgehoben eine Rastermasche RM und eine Elementarzelle EZ eingezeichnet. Wie aus diesem speziellen Beispiel ersichtlich, ist hier die Elementarzelle EZ so gewählt, daß sie sich mit der Rastermasche RM deckt.

Figur 2 zeigt zwei weitere Beispiele für Elementarzellen. Die Elementarzelle $EZ_2$ hat die Form eines Rechtecks und erstreckt sich über zwei benach barte Maschen. Die Elementarzelle $EZ_3$ ist ein Quadrat, das um 45° gegen die Rasterrichtung geneigt ist und besteht ebenso wie $EZ_2$ aus vier halben Rastermaschen.

Figur 3 zeigt eine andere Form von Elementarzellen. Die Elementarzelle $EZ_4$ gibt ein Beispiel für eine nicht geradlinig begrenzte, aber zusammenhängende Form. Wie ersichtlich, überdeckt sie in ihrer Gesamtheit ebenfalls das ganze Rasternetz definitionsgemäß.

Figur 4 zeigt ein Beispiel für eine Elementarzelle $EZ_5$ mit nicht zusammenhängender Fläche. Es sind auch andere Elementarzellen mit nicht zusammenhängender Fläche möglich, soweit sie die vorgenannten Definitionskriterien erfüllen.

Aus solchen Elementarzellen wird die Form und Größe der eigentlichen Abtastblende hergeleitet.

Weil bei optoelektronischer Bildabtastung die Rastermasche über ein optisches System auf den Lichtempfänger abgebildet wird, dessen Abbildungsmaßstab in der Regel nicht 1:1 ist, hat die Blende in ihren Abmessungen nicht unbedingt die tatsächliche Größe der Elementarzelle. Die tatsächliche Blendenöffnung ist ein ähnliches Abbild der Elementarzelle, das dem Abbildungsmaßstab entspricht.

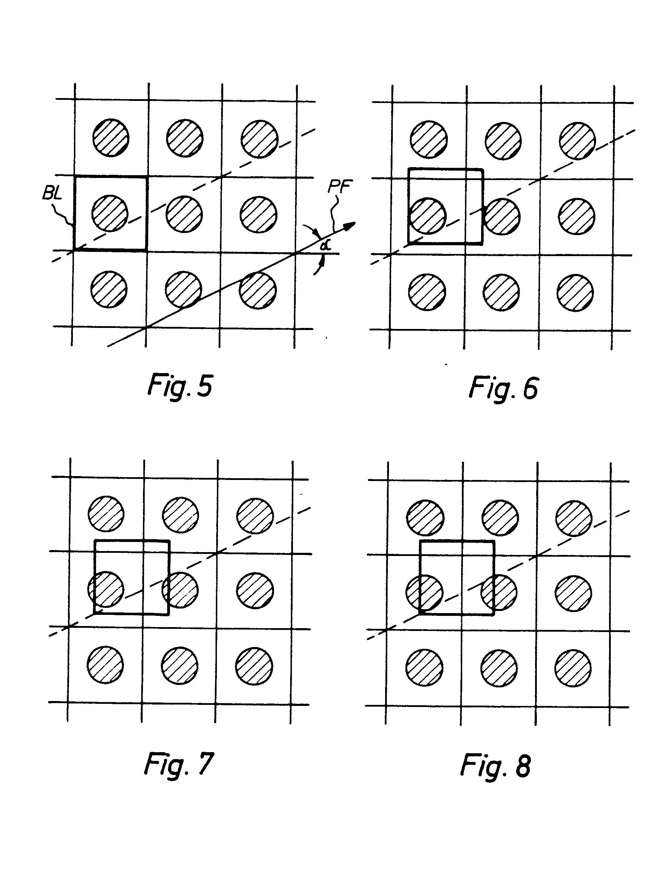

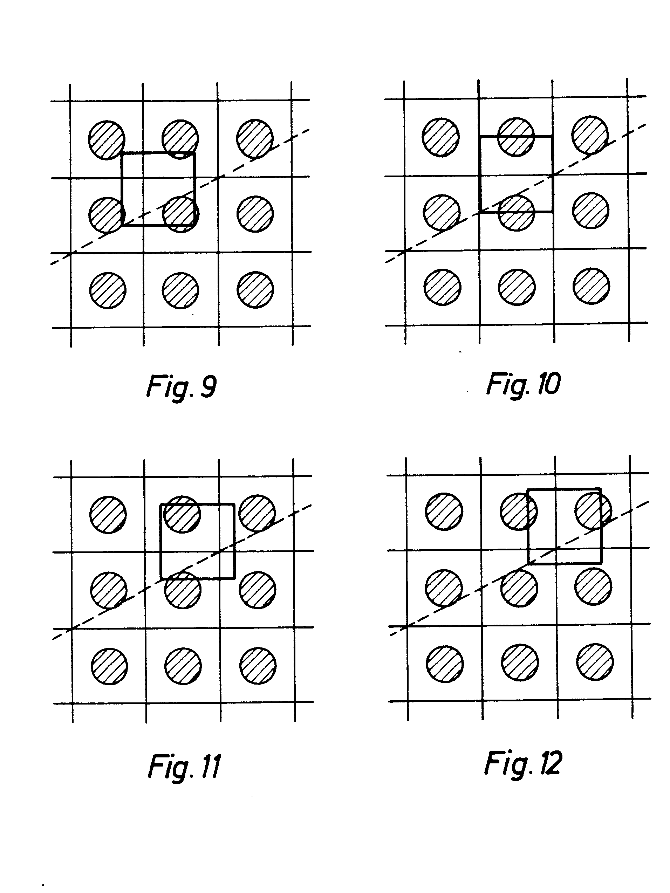

Die Figuren 5—12 zeigen verschiedene aufeinanderfolgende Phasen einer Vorlagenabtastung, wobei zum besseren Verständnis die einfache quadratische Blenden- und Elementarzellenanordnung aus Figur 1 zugrundegelegt wurde. In diesem Beispiel wird, ausgehend von Figur 5, eine Blende BL entlang der Richtung eines Pfeils PF relativ zur Vorlage bewegt. Man erkennt leicht, daß in den einzelnen dargestellten Phasen dieser Bewegung das Verhältnis schwarzer und weißer Flächenanteile, gleiche Rasterpunktgröße vorausgesetzt, innerhalb des ausgeblendeten Bereichs unabhängig von der Position der Blende ist. Die Ortsfrequenz des Vorlagenrasters ist damit aus dem Abtastsignal eliminiert. Das gilt, wie die Abbildungen zeigen, selbst dann, wenn die Relativbewegung von Blende und Vorlage in einem beliebigen Winkel α zum Vorlagenraster erfolgt, wie die gestrichelte Linie in den Figuren 6—12 andeutet.

In modernen elektronischen Reproduktionsgeräten entsteht die Relativbewegung zwischen Vorlage und Abtastorgan normalerweise dadurch, daß die Vorlage auf eine rotierende Trommel aufgespannt ist und sich das Abtastorgan kontinuierlich oder schrittweise in axialer Richtung an der Trommel vorbeibewegt. Die Abtastung erfolgt dadurch entweder in Form einer Helix mit kleiner Steigung oder mit parallelen Umfangslinien. (Letzteres ist auch bei Flachbettabtastern der Fall). Ist z.B. die Vorlage ein rechteckiges unter 30° gerastertes Bild, das mit seinen Kanten in Umfangsrichtung auf der Trommel aufgespannt ist, so ergibt sich bei der Abtastung eine Relativbewegung, wie in Figuren 5—12 dargestellt.

Beim Abtastvorgang ist es von Bedeutung, daß die Blende entsprechend der Elementarzelle, von der sie abgeleitet ist, zum Vorlagenraster ausgerichtet ist, wobei es, wie die Praxis zeigt, nicht auf große Genauigkeit ankommt.

Die Blende darf bei der Abtastung im Gegensatz zu der oben definierten Elementarzelle die Vorlage überlappend oder auch mit Zwischenräumen erfassen. Im ersteren Falle wird feinere Auflösung erreicht, was z.B. von Bedeutung ist, wenn die Aufzeichnung in einem etwa gleich feinen oder feinerem Raster, aber unter anderem Rasterwinkel als die Vorlage erfolgen soll. Der umgekehrte Fall ist vorteilhaft (Zeitersparnis), wenn in gröberem Raster aufgezeichnet werden soll.

Grundsätzlich kann eine solche Abtastblende in der üblichen Art, etwa durch Stanzen, Ätzen, Funkenerodieren, Perforieren mittels Hochenergiestrahlen von metallischen Scheiben oder durch entsprechende Teilbedampfung von durchsichtigem Material mit lichtundurchlässigem Niederschlag hergestellt werden. Ebenfalls ist es möglich, Lichtleitern einen entsprechenden Querschnitt zu geben.

Die Erfindung findet zwar in der Reproduktionstechnik vorwiegend Anwendung bei der optoelektronischen Abtastung, jedoch kann sie ebenso in solchen Fällen eingesetzt werden, bei denen eine gerasterte Vorlage etwa zeilenweise abgetastet wird, wobei die Aufzeichnung auf ein lichtempfindliches Medium direkt durch das von der Vorlage reflektierte Licht über eine entsprechende optische Einrichtung zur Abbildung (z.B. Linsensysteme und/oder Lichtleitfasern) über die erfindungsgemäße Blende erfolgt.

Ein bevorzugtes Anwendungsgebiet ist beispielsweise in der Drucktechnik gegeben, wenn zur Erstellung der Druckform von gerasterten Vorlagen ausgegangen wird. Es tritt häufig der Fall ein, daß die Originalvorlage nicht mehr im Zugriff ist, sondern nur noch ein bereits gerasterter Druck oder gerasterte Farbauszüge verfügbar sind.

Ein bedeutender Anwendungsfall liegt in der heute vielfach praktizierten sogenannten Offset-Tiefdruck-Conversion, wie sie in der DE-B-28 05 874 beschrieben ist.

## Patentansprüche

1. Abtastverfahren zur Vermeidung von Moiré in der Reproduktionstechnik, insbesondere bei optoelektronischer Bildabtastung, wobei von einer regulär gerasterten Vorlage ausgegangen wird, dadurch gekennzeichnet, daß

a) zur Abtastung eine Blende (BL) verwendet wird, deren Öffnung einem dem Abbildungsmaßstab der Abtastoptik entsprechenden Abbild einer Elementarzelle (EZ) entspricht, wobei die Fläche der Elementarzelle einer oder mehrerer Rastermaschen des Vorlagenrasters gleich ist und eine beliebig begrenzte zusammenhängende oder nicht zusammenhängende Fläche ist und das Rasternetz der Vorlage durch die Elementarzellen lückenlos und ohne Überlappung überdeckt wird und wobei die einzelne Elementarzelle so orientiert ist, daß die relative Lage zwischen Elementarzelle und Rastermasche über das ganze Vorlagenraster gleich ist.

b) die Blende (BL) bei der Abtastung durch Drehung um die optische Achse des Abtastsystems möglichst parallel zur Ausrichtung der Elementarzellen (EZ) im Vorlagenraster, wie sie bei der Aufspannung der Vorlage für die Abtastung gegeben ist, ausgerichtet ist und

c) daß die Vorlage durch eine beliebige Relativbewegung in ihrer Ebene zwischen Blende und Vorlage abgetastet wird.

2. Blende zur Durchführung des Verfahrens nach Anspruch 1 dadurch gekennzeichnet, daß die Öffnung der Blende (BL) einem dem Abbildungsmaßstab der Abtastoptik entsprechenden Abbild einer Elementarzelle (EZ) entspricht, wobei die Fläche der Elementarzelle einer oder mehrerer Rastermaschen (RM) des Vorlagenrasters gleich ist und eine beliebig begrenzte zusammenhängende oder nicht zusammenhängende Fläche ist und das Rasternetz der Vorlage durch die Elementarzellen lückenlos und ohne Überlappung überdeckt wird und wobei die einzelne Elementarzelle so orientiert ist, daß die relative Lage zwischen Elementarzelle und Rastermasche über das ganze Vorlagenraster gleich ist.

## Revendications

1. Système d'analyse de balayage pour éviter le moiré dans la technique de reproduction, notamment lors de l'exploration optoélectronique d'images, procédé dans lequel on part d'un original régulièrement tramé, procédé caractérisé en ce que:

a) on utilise pour l'exploration un diaphragme (BL) dont l'ouverture correspond à la reproduction, à l'échelle de reproduction de l'optique d'exploration, d'une cellule élémentaire (EZ), la surface de cette cellule élémentaire étant égale à une ou plusieurs mailles de la trame de l'original et étant une surface cohérente ou non cohérente délimitée de façon quelconque, le réseau de trame de l'original étant recouvert sans lacunes et sans chevauchements par les cellules élémentaires et les différentes cellules élémentaires étant orientées de façon telle que la position relative entre les cellules élémentaires et les mailles de trame est la même sur toute la trame de l'original,

b) le diaphragme (BL) lors de l'exploration est orienté, par rotation autour de l'axe optique du système d'exploration, autant que possible parallèlement à l'alignement des cellules élémentaires (EZ) sur la trame de l'original, tel qu'il se présente lors de la fixation de l'original pour l'exploration,

c) l'original est exploré grâce à un déplacement relatif dans son plan par rapport au diaphragme.

2. Diaphragme d'exploration pour la mise en oeuvre du procédé selon la revendication 1, caractérisé en ce que l'ouverture du diaphragme (BL) correspond à une reproduction, à l'échelle de reproduction de l'optique d'exploration, d'une cellule élémentaire (EZ), la surface de cette cellule élémentaire étant égale à une ou plusieurs mailles (R) de la trame de l'original et étant une surface cohérente ou non cohérente délimitée de façon quelconque, le réseau de trame de l'original étant recouvert sans lacunes et sans chevauchements par les cellules élémentaires et les différentes cellules élémentaires étant orientées de façon telle que la position relative entre les cellules élémentaires et les mailles de trame est la même sur toute la trame de l'original.

## Claims

1. A scanning method for prevention of the moiré effect in reproduction technology, especially during opto-electronic image scanning, starting from a regularly screened original, characterized in that:

a) for the scanning a diaphragm (BL) is used the aperture of which corresponds to the image of an elementary cell (EZ) corresponding to the reproduction scale of the optical scanning system, the area of the elementary cell being equal to one or more screen meshes of the original screen and being a coherent or incoherent area delimited as required and the screen network of the original being covered without gaps and without overlapping by the elementary cells and the individual elementary cell being so oriented that the relative position between the elementary cell and the screen mesh is identical over the whole of the original screen,

b) the diaphragm (BL) during the scanning is aligned as parallel as possible to the alignment of the elementary cells (EZ) in the original screen, as established upon clamping the original for the scanning operation, by rotation around the optical axis of the scanning system, and

c) that the original is scanned by arbitrary relative displacement in its plane between the diaphragm and the original.

2. A diaphragm for application of the method according to claim 1, characterized in that the aperture of the diaphragm (BL) corresponds to the image of an elementary cell (EZ) corresponding to the reproduction scale of the optical scanning system, the area of the elementary cell being equal to one or more screen meshes (RM) of the original screen and being a coherent or incoherent area delimited as required and the screen network of the original being covered without gaps and without overlapping by the elementary cells and the individual elementary cell being so oriented that the relative position between the elementary cell and the screen mesh is identical over the whole of the original screen.

Fig. 1

Fig. 2

Fig. 3

Fig. 4

*Fig. 5*

*Fig. 6*

*Fig. 7*

*Fig. 8*

Fig. 9

Fig. 10

Fig. 11

Fig. 12